# EUROPEAN PATENT SPECIFICATION

(11) **EP 1 560 136 B1**
(45) Date of publication and mention of the grant of the patent: **20.09.2006**
(21) Application number: 04001962.2
(22) Date of filing: 29.01.2004
(51) Int. Cl.: G06Q 10/00

(54) **Output data management**
Ausgabedatenverwaltung
Gestion de données de sortie

(43) Date of publication of application: 03.08.2005
(73) Proprietor: UBS AG, 8001 Zürich (CH)
(72) Inventor: Heussi-Pfleger, Peter, 6340 Baar (Zug) (CH)
(74) Representative: Röthinger, Rainer

(56) References cited:
- EP-A- 0 990 972
- WO-A-98/49641
- US-A1- 2002 120 462
- GARVEY C ET AL: "ASD-VIEWS" PROCEEDINGS OF THE SYMPOSIUM ON SECURITY AND PRIVACY. OAKLAND, CALIFORNIA, APRIL 18 - 21, 1988, WASHINGTON, IEEE COMP. SOC. PRESS, US, 18 April 1988 (1988-04-18), pages 85-95, XP000043584

## Description

### Technical Field

The invention relates to the field of output data management. More specifically, the invention relates to mechanisms that allow for a distribution of content via output channels such as print centers and e-mail agents.

### Background of the Invention

The increasing demand for information has boosted fields that provide solutions for transferring information in various output forms to recipients. One common characteristic of such output management solutions is that they relate to the transfer of the same or at least similar content. In many cases, the only differentiating factor is the contact information (e.g. the postal or e-mail address) required to address the content to individual recipients. This fact allows the use of highly automated mechanisms that are widely employed in environments including print centers, call centers and e-mail agents.

Generally, output management solutions focus on a particular magnitude of recipients. This means, for example, that there are dedicated solutions for the handling of high-volume output such as mass mailings. On the other hand, there also are solutions that restrict output coverage to a few individually selected recipients. Output management solutions are generally optimized for a particular range of coverage because hardware and software requirements increase as output magnitude increases. Obviously, it would be a waste of resources if the capacities of a high-end print center would be employed for a print job that produces only a handful of documents. This implies that applications handling high-volume outputs, like mass mailings, will typically be specialized solutions receiving the content to be distributed and the contact information in the form of data files, whereas low-volume outputs are often handled by the same application (e.g. a word processing application) that defines the content to be distributed.

In addition to being magnitude specific, output management solutions are usually platform specific. This means that a solution allowing the coordination of mass mailings in a print center will be different from a solution that uses an e-mail handler to distribute e-mails via the Internet.

EP-A-0 990 972 discloses a system and method for managing data privacy in a database management system. In one implementation, marketing applications access customer information through a special dataview that removes or masks all data records associated with an activated "opt-out" indicator. Thus, any customer who has activated the "opt-out" indicator will be omitted from any contact list created by the marketing applications. According to the teachings of EP-A-0 990 972, dataviews are provided in accordance with the verified identities of the requesting entities. The requesting entities may than use the corresponding dataviews to access the database to obtain the requested data.

In Garvey C. et.al: "ASD-Views" Proceedings of the Symposium on Security and Privacy. Oakland, California, April 18 - 21, 1988, Washington, IEEE COMP. SOC. Press, US, 18 April 1988 (1988-04-18), pages 85-95, a multilevel secure database management system that ensures separation of sensitive information is introduced. In this context, dataviews are used to enforce mandatory and discretionary security. This is done by associating with every dataview a mandatory security label and an access control list. The user can use any dataview consistent with his access allowed by the discretionary and mandatory security policy. Dataviews automatically filter out data the user is not allowed to see and prevent her/him from writing data into objects she/he is not allowed to modify.

Accordingly, there is still a need for an efficient output management approach that can process highly fluctuating output magnitudes.

### Summary of the Invention

According to a first aspect of the invention, this need is satisfied by a method of dynamically managing the output of content via one or more output channels as specified in claim 1.

The method comprises the step of providing a data pool with data records that include at least contact information, the data pool being structured in accordance with a hierarchical authorization scheme having several authorization levels, the step of determining an authorization associated with a selection operation, the step of restricting the selection operation to a portion of the data pool that corresponds to the authorization associated with the selection operation so that the amount of selected data record correlates with the authorization level of the authorization underlying the selection operation, whereby the selection volume is controlled by an appropriate assignment of authorizations, a higher authorization level allowing the selection of data records of a higher volume than a low authorization level, the step of generating a selection list with contact information included in the selected data records, and the step of making the selection list available for the automatic generation of output on the basis of the contact information included in the selection list.

According to a further aspect of the invention, this need is satisfied by a method as specified in claim 5.

This method for dynamic output management comprises the step of providing a selection list that includes at least contact information and hierarchy information relating to a hierarchical authorization scheme having several authorization levels, the step of determining the authorization associated with a request to access the selection list, the step of restricting access to a portion of the selection list that corresponds to the authorization, so that the amount of accessible list entries correlates with the authorization level of the authorization underlying the access request, and the step of automatically generating the output on the basis of the contact information included in the selection list, whereby the output volume is controlled by an appropriate assignment of authorizations, a higher authorization level allowing the generation of output of a higher volume than a low authorization level.

The invention permits a shared use of a common data source (the data pool or the selection list) that provides contact information required to address the output to individual recipients. The shared data source is easy to handle and can be used for dynamically generating both low-volume and high-volume outputs. The output capabilities are controlled by an association of a hierarchical authorization scheme with the universe of contact information provided by the data source. The output volume can be efficiently controlled by an appropriate assignment of authorizations. Accordingly, a higher authorization rank (or level) may allow to generate output of a higher output volume than a low authorization rank. Output volumes thus become authorization dependent. One and the same application may be used for providing the contact information for both high volume and low volume output applications.

The selection list including the contact information (such as the postal address, the e-mail address or a telephone number of an individual recipient) can be generated so that its content is associated with the hierarchical authorization scheme of the data pool. If, for example, the data records in the data pool include hierarchy information, the hierarchy information of the data records selected for generating the selection list may be extracted into the selection list (in addition to the contact information and, if required, further information).

Having generated a selection list reflecting the hierarchical authorization scheme, access to the selection list may be granted in accordance with the authorization associated with (or underlying) the corresponding access request. Accordingly, the authorization scheme may not only be enforced when selecting the data records from which the selection list is generated, but also for restricting access to the selection list after its generation. Such an approach is useful if the authorization rank associated with the selection operation is higher than the authorization rank associated with a request to access the selection list.

The authorization control may be performed in various ways. In one embodiment, for example, the authorization is enforced login-controlled. With each login, an authorization control mechanism may be performed which automatically determines the authorization associated with the login and which subsequently assigns this authorization to, for example, selection requests or access requests initiated from the network component from which login was requested. According to a further embodiment, an authorization control mechanism is performed each time a selection request or an access request is initiated from a particular network component.

The selection list may be subject of a cooperative workflow during which the selection list is accessed from a plurality of cooperating components of a computer network. The workflow may be pre-defined or may be individually designed for a particular output campaign. During the workflow, the network components may be enabled to at least one of modify and display the selection list or parts thereof. Modification of the selection list may include operations like adding, deleting or changing contact information included therein.

Workflow control data as well as other data may be included in output campaign management data sets. The workflow control data may include a specification of individual networks components participating in the workflow. Additionally or alternatively, the workflow control data may include a specification of a particular workflow portion that is to be performed upon receipt of an output response. This arrangement means that the workflow need not necessarily end with generation of the output but could continue once output responses are received.

The output campaign management data may further include output channel specification data. The output channel specification data may specify for a particular workflow one or more output channels like print centers, local printers, e-mail agents, call centers, etc. The output channel specification data allow a platform independent implementation of the invention. While it may for example be appropriate to specify a local printer as an output channel when only a few documents have to be created, a print center may be specified as the output channel when mass mailings are required.

In addition to, or in the alternative to, workflow control data and output channel specification data, the output campaign management data may include output content data. The output content data specifies the content that is to be delivered to the recipients. The output content data may include a link to a data file containing the actual output content, for example, a text or graphics file.

According to a modular embodiment of the invention, the selection lists and the campaign management data are provided and handled by separate, interlinked modules. In such an embodiment, an individual set of campaign management data may be linked with one or more previously defined selection lists, and the output may be generated as defined by the campaign management data on the basis of the contact information included in the one or more selection lists.

A set of selection lists may be provided in a central manner. One or more individual selection lists from the set of selection list may then be selected for a particular output campaign. In one embodiment, a mechanism for aging out individual selection lists from the set of selection lists is provided. This mechanism may delete or otherwise block selection lists from being used (e.g., after a predefined or user-selectable period of time has elapsed since generation of the selection list). Alternatively, or additionally, the aging-out mechanism may provide a warning if an aged-out selection list is selected for an output campaign. The aging out-mechanism ensures that contact information included in selection lists created some time ago (and possibly no longer up-to-date) will not be used for output generation. Instead, a new selection list may need to be created.

If the workflow specifies an expected output response, a mechanism for automatically analyzing the output response may be provided. The data pool may be at least one of updated and supplemented in dependence of an evaluation of the output response.

In one embodiment of the invention, a campaign management authorization scheme is defined in addition to the hierarchical authorization scheme. Furthermore, a set of campaign management functions that can be utilized when defining a output campaign may be provided. The campaign management functions may be associated with the campaign management authorization scheme and may for example relate to aspects like response management, invitation management or selection list management. In this embodiment, (only) a sub-set of the campaign management functions may be utilized by a user generating or modifying an output campaign dependent on his authorization within the campaign management authorization scheme.

The invention may be implemented as a hardware solution or as software running on one or more components of a computer network. Accordingly, the invention also relates to a computer program product comprising program code portions for performing the above steps when the computer program product is run on one or more components of computer network. The computer program product may be stored on a computer readable recording medium.

As regards a hardware solution, the invention relates to a selection system for assisting the dynamic output management as specified in claim 22.

The system comprises a data pool with data records that include at least contact information, the data pool being structured in accordance with a hierarchical authorization scheme having several authorization levels, an authorization mechanism adapted to determine the authorization associated with a selection operation, a unit adapted to restrict the selection operation to a portion of the data pool that corresponds to the authorization, so that the amount of selected data records correlates with the authorization level of the authorization underlying the selection operation, whereby the selection volume is controlled by an appropriate assignment of authorizations, a higher authorization level allowing the selection of data records of a higher volume than a low authorization level, a generator adapted to generate a selection list with contact information included in the selected data records of the data pool portion to which the selection operation has been restricted, and an interface adapted to make the selection list available for the automatic generation of output on the basis of the contact information included in the selection list.

According to a still further aspect, the invention relates to an output management system for dynamically managing the output of content as specified in claim 23.

The system comprises a selection list that includes at least contact information and hierarchy information relating to a hierarchical authorization scheme having several authorization levels, an authorization mechanism adapted to determine the authorization associated with an access request to the selection list, a unit adapted to restrict access to a portion of the selection list that corresponds to the authorization associated with the access request so that the amount of accessible list entries correlates with the authorization level of the authorization underlying the access request, and means adapted to automatically generate the output on the basis of the contact information included in the selection list, whereby the output volume is controlled by an appropriate assignment of authorizations, a higher authorization level allowing the generation of output of a higher volume than a low authorization level.

### Brief Description of the Drawings

In the following the invention will be described with reference to exemplary embodiments illustrated in the figures, in which:
- Fig. 1: is a schematic diagram illustrating an arrangement for dynamic output management according to a first embodiment of the invention;
- Fig. 2: schematically depicts a hierarchical authorization scheme and a data pool structured in accordance with the hierarchical authorization scheme;
- Fig. 3: schematically shows the generation of a selection list from individual data records included in the data pool of Fig. 2;
- Fig. 4: is a process flow diagram according to a second embodiment of the invention;
- Fig. 5: is a process flow diagram according to a third embodiment of the invention;

- Fig. 6: is a process flow diagram according to a fourth embodiment of the invention; and
- Fig. 7: is a schematic diagram showing an exemplary workflow according to a fifth embodiment of the invention.

### Detailed Description of Preferred Embodiments

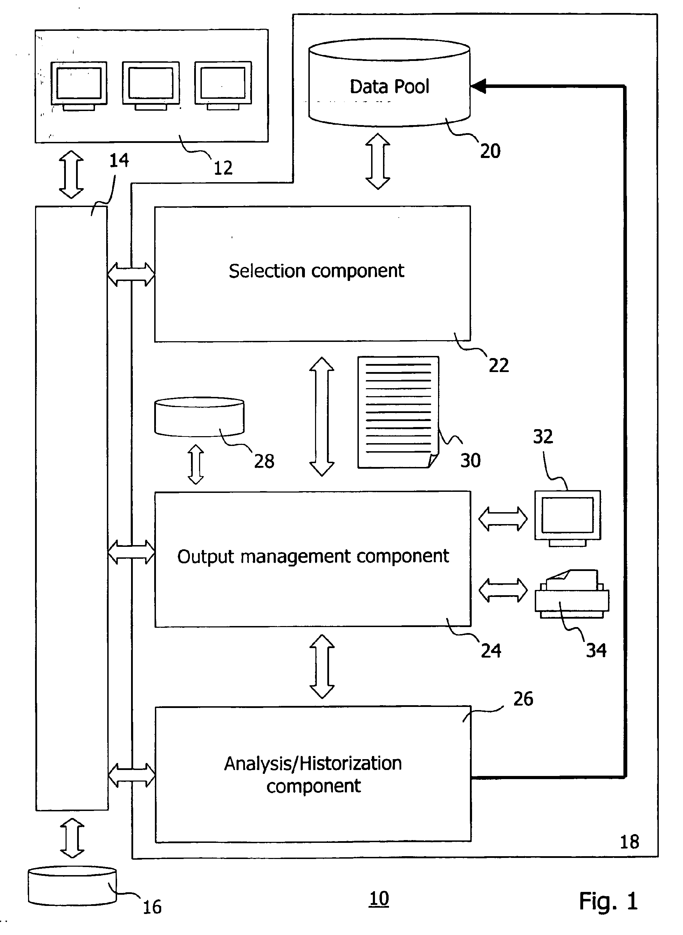

In Fig. 1 an output management system 10 according to a first embodiment of the invention is shown.

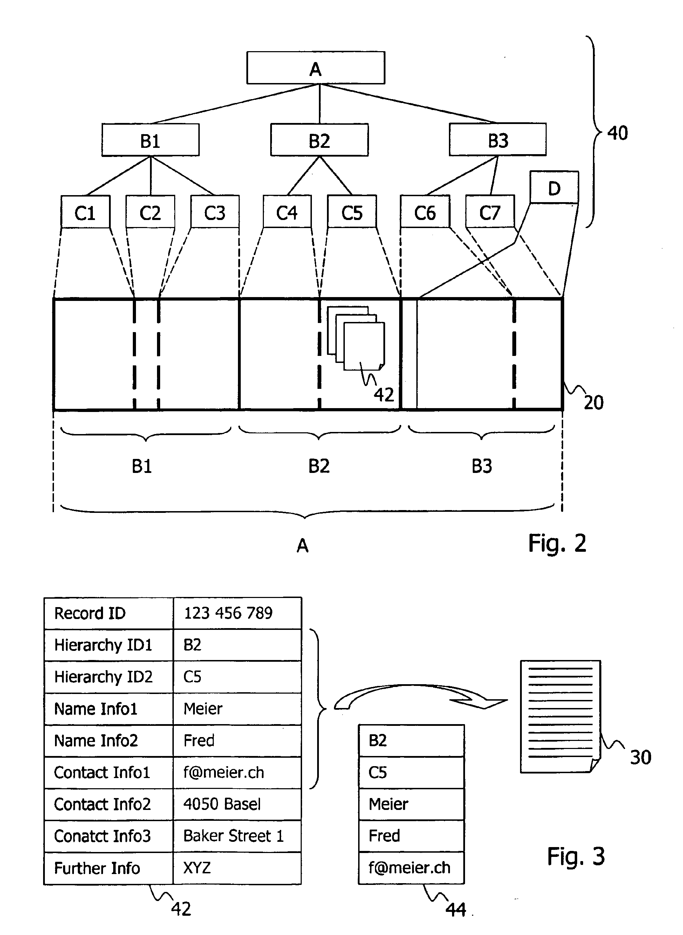

The output management system 10 is configured as a computer network that includes a plurality of different network components. More specifically, the system 10 includes a plurality of user-operable front components 12, authorization management components 14, 16 and an output generation tool 18. The front components 12 are configured to communicate with the output generation tool 18 via an authorization controller 14 of the authorization management component. The authorization management component further comprises an authorization database 16 in which information relating to the authorization mechanism enforced by the authorization controller 14 are stored. In the present case, the authorization information stored in the authorization database 16 relates to a hierarchical authorization scheme that will be explained in more detail with reference to Fig. 2 below.

The output generation tool 18 includes a data pool 20, a selection component 22, an output management component 24 and an analysis/historization component 26. The output management component 24 has access to a database 28 for storing a set of previously generated selection lists 30. Furthermore, the output management component 24 is configured to selectively generate output data that is to be distributed via one or more output channels like an e-mail agent 32 and printing facilities 34. The printing facilities 34 can be configured as a print center for mass mailings or as a local printer for low-volume mailings.

The data pool 20 includes a plurality of individual data records that each include contact information, hierarchy information and further information as will be explained later with reference to Fig. 3 in more detail. The data pool 20 is configured as a data warehouse solution allowing online analytical data processing (OLAP) based on information cubes. Alternatively, the data pool 20 could be configured as a conventional relational database or as any other data storage schema that is known in the art.

The data pool 20 and the selection component 22 cooperate to generate selection lists 30 in response to selection requests received via the authorization controller 14 from the front components 12. The selection component 22 is a separate module communicating via a pre-defined interface (not shown) with the output management component 24. This communication basically includes the asynchronous transfer of selection lists 30 to the output management component 24 or directly to the database 28 for storing a set (or library) of selection lists 30. Although the database 28 is shown as a component that is separate from the output management component 24, it could also be included therein.

Based on one or more selection lists stored in the database 28 and output campaign management data received from the front components 12, the output management component 24 controls one or both of the e-mail agent 32 and the printing facilities 34 to generate the desired output.

Output response received, for example, by the front components 12 via e-mail or any other way is analyzed and evaluated by the analysis/historization component 26. If required, the analysis/historization component 26 modifies, adds or deletes data records in the data pool 20 depending on an evaluation of the output response. During historization, data about an output campaign and/or output response data are written in a log file to document the history of a particular output campaign. This log file may be used for automatic collision management in future output campaigns. The log file or portions thereof may be stored in the data pool 20. Moreover, the content of the log file or portions thereof may be associated with the data records involved in the output campaign for which the log file has been created. Such an association may include incorporating data provided by the analysis/historization component 26 in data records stored in the data pool 20.

Fig. 2 schematically shows the structure of the data pool 20. As becomes apparent from Fig. 2, the data pool 20 is structured in accordance with a hierarchical authorization scheme 40. In the present embodiment, the hierarchical authorization scheme 40 includes three different hierarchy levels. The uppermost hierarchy level (A level) specifies an authorization which permits the selection and access of the entire content of the data pool 20. An intermediate hierarchy level (B level) is associated with an authorization that permits the selection and access of only portions of the data pool 20. The lowest level (C level) permits the selection and accress of only a sub-portion of the data pool portion associated with a particular B level authorization. Additionally, an outbound level (D level) is defined in the authorization scheme. D level, however, is outside the hierarchy (i.e., has no upper or lower level).

In the embodiment shown in Fig. 2, the hierarchical authorization scheme 40 includes a single authorization on the A level, three authorizations on the B level and seven authorizations on the C level. The data pool portion associated with authorization B1 is divided in three sub-portions, each sub-portion being associated with a single one of authorization C1, authorization C2 and authorization C3. The data pool portion associated with the authorization B2 and B3 are structured similarly. The authorizations associated with the data pool portions or sub-portions specify that particular rights are required to access the data pool portions or sub-portions. A data pool portion associated, for example, with the authorization C1, can only be accessed by a network component to which exactly this authorization C1 (or a corresponding higher level authorization like B1 or A) is assigned. Such an assignment can be performed during a login procedure as will be explained below.

The data pool portion associated with authorization D corresponds to the data pool sub-portion associated with authorization C7 and a part of the data pool sub-portion associated with authorization C6. Authorization D, although defined within the authorization scheme, is not incorporated in the authorization hierarchy. It may thus flexibly be assigned to accesses or selection operations from, for example, outbound components or entities that have no (permanent) rank in the authorization hierarchy.

In the embodiment discussed in context with Fig. 2, the data pool 20 comprises a plurality of data records 42. Each data record 42 is associated with one or more authorizations of the hierarchical authorization scheme 40. This association can be realized in various ways. An example for associating data records 42 with authorizations of the hierarchical authorization scheme 40 is shown in Fig. 3. As becomes apparent from Fig. 3, the data record 42 includes hierarchy identification data (or hierarchy information) that helps to structure the data pool 20 in accordance with the hierarchical authorization scheme 40.

The hierarchical identification data specifies the authorization to which a particular data record is assigned. As shown in Fig. 3, the data record 42 having the record ID 123 456 789 is assigned to authorization C5 on the lower hierarchy level and to authorization B2 on the intermediate hierarchy level. As the association between authorization C5 and authorization B2 is known from the hierarchical authorization scheme 40 (that is stored in the authorization database 16), it would in principle be sufficient to specify, in the data record 42, a single authorization on the lowest hierarchy level (C level) and to derive the "parents", (i.e. authorization B2 and authorization A), from the authentication database 16. Data record 42 need not (and is not) explicitly assigned to authorization A of the uppermost hierarchy level because authorization A is an authorization granting full access and selection rights with respect to all data records 42 of the data pool 20.

As can be seen from Fig. 3, the data record 42 includes supplemental information. More specifically, the data record 42 includes information about the first name and the last name of a person called Fred Meier (Name Info1, Name Info2) as well as contact information relating to this person. The contact information includes the e-mail address of Fred Meier (Contact Info1) and the postal address specified as Contact Info2 and Contact Info3. With respect to the postal address, the first name and the last name as specified by Name Info 1 and Name Info 2 may be considered as supplemental contact information. If required, the data record 42 could include further information not explicitly specified in Fig. 3.

As has been explained with reference to Fig. 1, the selection component 22 is configured to selectively extract data records or portions thereof from the data pool 20 to generate the selection list 30 that includes (at least) contact information. Fig. 3 exemplarily depicts a portion 44 of a selected data record 42 that is inherited from the selected data record 42 and transferred to the selection list 30. The inherited data record portion 44 includes hierarchy information in the form of a specification of the authorizations C5 and B2 required to access the data record 42 as well as contact information in the form of an e-mail address. Additionally, the first name and the last name of the person to which an e-mail shall be sent are inherited from the selected data record 42.

Accordingly, the selection list 30 includes a plurality of data record portions 44 of data records 42 selected by the selection component 22 during a particular selection operation. It should be noted that the selection list 30 could alternatively be include the complete data records 42.

Due to the hierarchy information included in the data record portions 44 from which the selection list 30 is assembled, the selection list 30 to a certain extent reflects the hierarchical authorization scheme 40 underlying the structure of the data pool 20. As will be explained in more detail below, the hierarchy information included in the selection list 30 may be utilized later to selectively grant access to those data record portions 44 of the selection list 30 that correspond to the authorization underlying the access request.

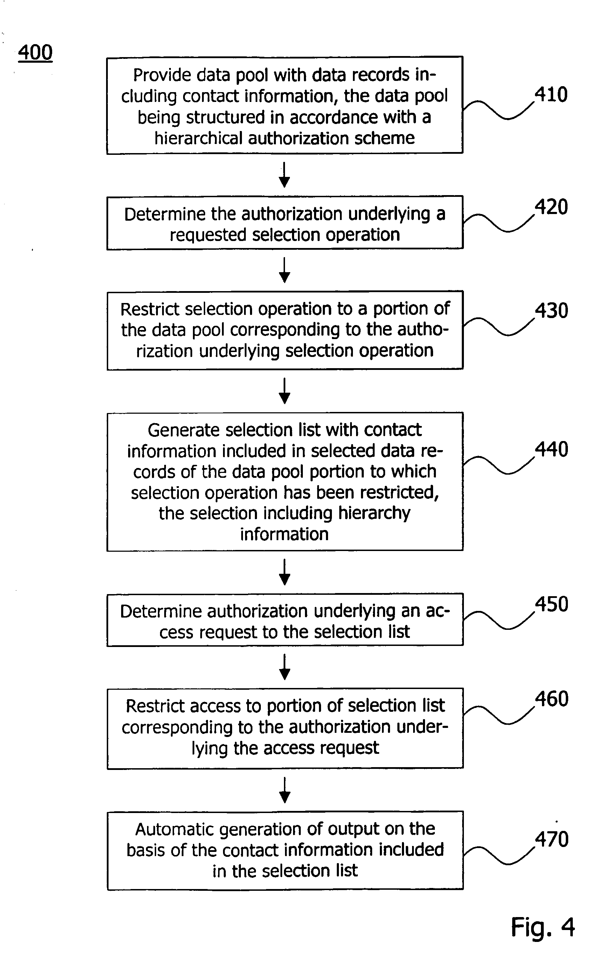

Now, a further embodiment of the present invention will be described with reference to the flow chart 400 of Fig. 4. The flow chart 400 schematically shows the steps that are performed to dynamically manage the output of content utilizing an output management system similar to that shown in Fig. 1. Accordingly, the reference numerals of the components shown in Fig. 1 will be utilized when referring to similar components.

The method starts in step 410 with the provision of a data pool 20 that comprises data records that include contact information such as an e-mail address, a postal address or a telephone number. The data pool is structured to reflect a hierarchical authorization scheme. This hierarchical authorization scheme is configured such that a higher authorization level (or rank) is in general associated with a higher number of selectable data records than a lower authorization level. Accordingly, a higher authorization level will be required for managing a high-volume output campaign whereas a low authorization level only allows to initiate a low-volume output campaign. Therefore, the same data source (here the data pool 20) is used for output campaigns of highly dynamic output volumes. Regardless of whether particular content is to be sent to a million recipients or whether only a handful of recipients is to be contacted via a call center, the contact information required in this regard need only be derived from one data source.

In a next step 420 the authorization underlying a requested selection operation is determined. This determination of the authorization is necessary to restrict the selection operation to a portion of the data pool 20 (i.e., to data records) that corresponds to the authorization underlying the selection operation (step 430). This means, in the example shown in Fig. 2, that if a network component having authorization C5 requests a selection operation, this selection operation will only be performed in the portion of the data pool 20 assigned to the authorization C5.

In a next step 440, a selection list is generated that comprises contact information included in the data records that have been specified in the selection operation and are included in the data pool portion to which the selection operation has been restricted. In addition to the contact information, the selection list may include hierarchy information relating to the hierarchical authorization scheme and further information.

When access to the selection list is requested, the authorization underlying the access request is determined in step 450. It should be noted that the network component requesting access to the selection list in step 450 may be different from the network component that requested the selection operation in step 420. In particular, the network component requesting access to the selection list may be assigned to a lower hierarchy level than the network component that has initiated generation of the selection list. Should this be the case, access of the network component requesting access to a selection list is restricted to the selection list portion (e.g. selection list entries) corresponding to the authorization underlying the access request (step 460).

The access request may be motivated by a workflow requirement to display or modify the selection list. The modification of the selection list may include adding, deleting or changing contact information.

In a last step 470 the output is automatically generated on the basis of the contact information, (that may have been modified in step 460), included in the selection list. The output generated in step 470 may, for example, include a plurality of documents individually addressed in accordance with the contact information derived from the selection list, one or more individually addressed e-mails, a call center list including a plurality of telephone numbers included in the contact information etc.

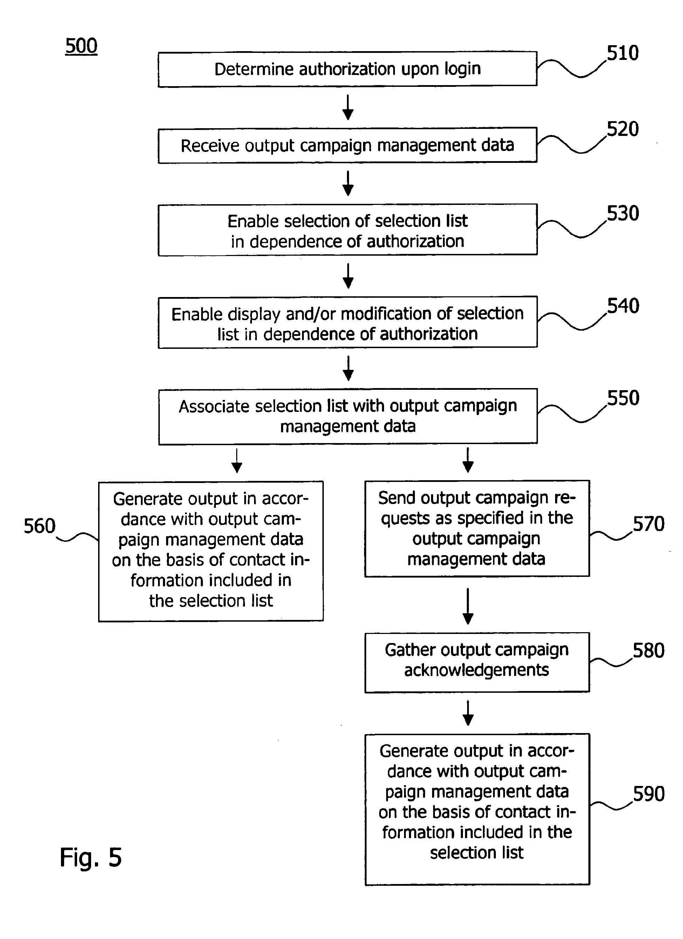

A further embodiment of the invention will now be described with reference to the flowchart 500 of Fig. 5. The flowchart of Fig. 500 shows a plurality of steps that may be performed once one or more selection lists have been generated.

The method starts in step 510 when via a user-operable network component a login procedure is requested. During this login procedure, which may include a user authentication, the authorization underlying the login is determined and corresponding authorization information is associated with the newly logged in network component (and, for example, stored in the authorization database 16 shown in Fig. 1).

After the authorization step 510, campaign management data is received (by the output management component 24) in step 520. The output campaign management data include workflow control data specifying the particular network components participating in the workflow, output channel specification data and content data that are to be output. The content data may be specified by a path to a file and a file name.

The campaign management data may be included in a campaign data set. Referring to Fig. 1, the campaign data set may be provided by the front components 12 directly or may be stored within the output generation tool 18 (e.g., in the database 28). The output generation tool 18 may provide multiple campaign data sets and permit a user selection of an individual campaign data set. Each campaign data set may include a unique campaign identifier (campaign ID) that permits the output generation tool 18 to differentiate between multiple output campaigns processed in parallel. Upon selection of a campaign data set (and upon receipt of the output campaign management data included therein by the output management component 24), the output campaign management data may be associated with selection lists or parts thereof as will now be explained in more detail.

Once the output campaign management data has been received, in step 530 selection of one or more selection lists is permitted dependent on the authorization determined in step 510. As previously mentioned, one or more individual selection lists may be selected from a library of selection lists stored (e.g., in the database 28 (Fig. 1)). In order to prevent the selection of lists that have been generated a long time ago (and may thus include outdated contact information), an aging-out mechanism is provided that ensures that selection lists can no longer be selected if they were generated too long ago.

The selection of selection lists is performed such that it is controlled by authorization. This means that only such lists can be selected that correspond to the authorization associated with the selecting network component or, alternatively, for which selection rights have been conferred to the selecting network component. The selection lists may include an attribute designating the network component, authorization and/or user that generated a particular network list. This approach facilitates the usage of previously generated (and e.g. user-specific) selection lists for a new output campaign. In particular, it allows the decoupling of the generation of selection lists from the definition of output campaigns.

After the selection of one or more selection lists, the method continues with step 540. In step 540 a display and/or modification of the one or more selected lists is permitted. Again, selection lists can be displayed and/or modified only to the extent a particular network component is authorized. This means in the example shown in Fig. 2 that a network component associated with the authorization C4 could not display and/or modify those portions of the selection list that have been derived from the data pool portion associated with the authorization C5.

In a next step 550, the one or more selected lists are associated with the received output campaign management data. Depending on the content of the output campaign management data the method proceeds either with step 560 or with step 570. The method may conclude at step 560 where the output is generated in accordance with the output campaign management data on the basis of the contact information included in the one or more selected lists.

If the output campaign management data specifies that output campaign requests are to be sent to individual network components participating in a particular output campaign, the method continues with step 570. In step 570 the output campaign requests are sent to the network components as specified in the output campaign management data. The output campaign requests may be automatically transmitted to participating network components (e.g. in the form of e-mails).

The output campaign requests may relate to different aspects. For example, they may simply include a notification that an output campaign is to be initiated. Additionally or alternatively, they may request the participating network components to review and/or update the contact information included in the selection list.

In response to the transmission of output campaign requests, the receipt of output campaign acknowledgements is expected. The output campaign acknowledgements are gathered in step 580. Once an output campaign acknowledgement has been received for every output campaign request, the method proceeds with step 590. In step 590 the output is automatically generated in accordance with the output campaign management data on the basis of the contact information included in the one or more lists that have been associated with the output campaign management data in step 550.

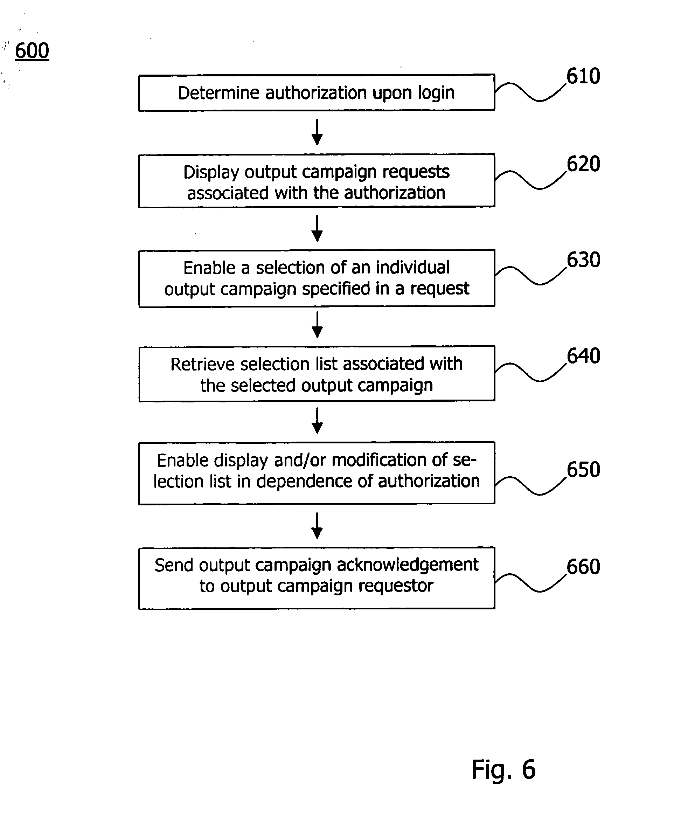

A further embodiment of the invention will be described with reference to the flowchart 600 of Fig. 6. The steps shown in Fig. 6 are performed by a network component receiving an output campaign request as shown in step 570 of Fig. 6.

The method starts in step 610 with determining the authorization associated with the network component requesting login. Step 610 corresponds to step 510 shown in Fig. 5, and a detailed explanation thereof will thus be omitted.

In a next step 520, the logged-in network component may initiate a display of all output campaign requests currently associated therewith. In step 630, a selection of an individual output campaign specified by an output campaign request is permitted. Upon selection of an individual output campaign, one or more selection lists associated with the selected output campaign are retrieved in step 640.

In step 650, display and/or modification of the retrieved selection list in dependence of the particular authorization is permitted. This permission means in the example shown in Fig. 2 that a network component associated with the authorization C5 may neither display nor modify selection list portions that have been created for data records associated, for example, with the authorization C4 (although such selection list portions may be included in a selection list).

When the selection list has been modified as required, or if no modification was necessary, an output campaign acknowledgment is sent to the output campaign request in step 660.

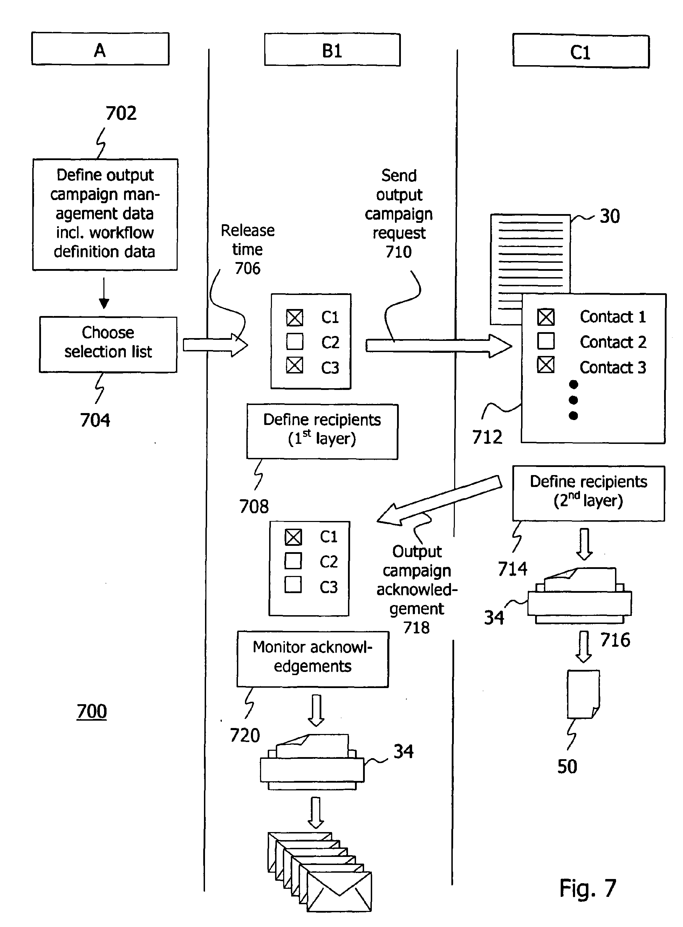

As has been mentioned above, the individual steps described above in particular with reference to Figs. 5 and 6 may be performed during a co-operative workflow during which the selection list is accessible from a plurality of co-operating components of a computer network. Such a cooperative workflow is schematically shown in Fig. 7.

The workflow shown in Fig. 7 involves the network components with the authorizations A, B1 and C1. The workflow 700 starts with the input of output campaign management data including workflow definition data in step 702. The workflow definition data specify the network components participating in the workflow 700, (in the present case only the network component associated with the authorization B1, and thus implicitly also the network components associated with the authorizations C1, C2 and C3, are specified) as well as temporary information including a workflow release time.

The definition of the output campaign management data (or of the workflow defined therein) may involve one or more functions of a predefined set of campaign management functions. The campaign management functions may be structured in accordance with a campaign management authorization scheme. Each user having rights to generate, change or supplement an output campaign may have an individual campaign management authorization, such that the user has only access to a sub-set of the campaign management functions dependent on his authorization within the campaign management authorization scheme.

Once the output campaign management data have been defined in step 702 and sent to the output management component 24 of Fig. 1, one or more selection lists 42 may be selected and associated by the output management component 24 with newly defined output campaign management data in step 704.

As specified in the workflow definition data, information about the newly defined output campaign is automatically sent at the release time to the network component associated with the authorization B1 (step 706). Network component B1 (i.e., the network component associated with the authorization B1) is requested to define the participating network components on the C level in step 708.

In step 710 output campaign requests are automatically transmitted to the network components on the C level selected by network component B1. In the present case, output campaign requests are thus sent to network components C1 and C3. In the following, the steps performed by the network component C1 in response to receipt of the output campaign request from network component B1 will be described in more detail.

The output campaign request triggers the network component C1 to specify the contact information included in the selection list 42 that is to be selected for the output campaign. To this end, the network component C1 retrieves the selection list 42 earlier selected (and possibly created) by the network component A. The network component C1 is only authorized to display the contact information relating to its authorization C1 (schematically shown as the leftmost portion of data pool 20 in Fig. 2).

Network component C1 modifies the portion of the selection list that corresponds to its authorization C1 by indicating which contact information is to be used for the output campaign. By selecting the contact information in step 712, the network component C1 individually defines the output campaign recipients associated with its authorization (step 714). In a next step 716, network component C1 may control a local printer 34 to generate one or more documents 50 relating to the contact information specified in step 702. The document 50 may for example be a call list.

It is specified in the workflow definition data that once the selection list has been processed, network component C1 must send an output campaign acknowledgement back to network component B1 in step 718. In step 720, network component B1 monitors receipt of the output campaign acknowledgements from the level C network components specified in step 708.

Once output campaign acknowledgements have been received from all level C network components specified in step 708, the output can be generated on a basis of the selection list processed by network components C1 and C3. As a last step, the updated selection list is used by a print center 34 as a basis for generating mass mailings. The output channel (print center) has been specified in the output campaign management data defined by network component A. In this context it should be noted that the physical output of an output campaign need not necessarily be generated at the end of a workflow. As has been mentioned above with reference to step 716, campaign output may already be generated at an earlier stage of the workflow 700.

Although not shown in Fig. 7, the workflow 700 could comprise further steps that are performed upon receipt of a response to a particular output campaign. This response may for example include the receipt of e-mails or the like. Accordingly, the workflow control data may include a specification of a workflow portion that is performed upon receipt of an output response. As indicated in Fig. 1, this workflow portion may include an analysis or a historization performed by the analysis/historization component 26. The analysis may indicate the success of the output campaign, and the historization may be used for collision management in future output campaigns (e.g., to avoid that a particular data record or data included therein is used in similar or contradicting output campaigns). Historization may also be performed to make the data records stored in the data pool 20 consistent with information (e.g., change of contact information) received as output response.

As many possible embodiments may be made of the invention without departing from the scope thereof, it is to be understood that all matter set forth above or shown in the accompanying drawings is to be interpreted as illustrative and not in a limiting sense.

## Claims

1. A method of managing the output of content via an output channel to a plurality of recipients, wherein the output volume is dependent on the amount of data records (42) selected from a data pool (20) in response to a selection operation, the method comprising the steps of
- providing a data pool (20) with data records (42) that include at least contact information, the data pool (20) being structured in accordance with a hierarchical authorization scheme (40) having several authorization levels;
- determining an authorization associated with the selection operation;
- restricting the selection operation to a portion of the data pool (20) that corresponds to the authorization, so that the amount of selected data records (42) correlates with the authorization level of the authorization underlying the selection operation, whereby the selection volume is controlled by an appropriate assignment of authorizations, a higher authorization level allowing the selection of data records of a higher volume than a low authorization level;
- generating a selection list (30) with contact information included in data records (42) selected from the data pool (20); and
- making the selection list (30) available for the automatic generation of output on the basis of the contact information included in the selection list (30).

2. The method of claim 1, further comprising the step of generating the selection list (30) such that its content reflects the hierarchical authorization scheme (40).

3. The method of claim 1 or 2, wherein the data records (42) include hierarchy information, and comprising the step of extracting the hierarchy information included in the selected data records (42) into the selection list (30).

4. The method of claim 2 or 3, further comprising the steps of receiving a request to access the selection list (30) and restricting access to the selection list (30) in accordance with the authorization associated with the access request.

5. A method of managing the output of content via an output channel to a plurality of recipients, wherein the output volume is dependent on the content of a selection list (30) accessible via a computer network, the method comprising the steps of
- providing a selection list (30) that includes at least contact information and hierarchy information relating to a hierarchical authorization scheme (40) having several authorization levels;
- determining the authorization associated with a request to access the selection list (30);
- restricting access to a portion of the selection list (30) that corresponds to the authorization, so that the amount of accessible list entries correlates with the authorization level of the authorization underlying the access request; and
- automatically generating the output on the basis of the contact information included in the selection list (30), whereby the output volume is controlled by an appropriate assignment of authorizations, a higher authorization level allowing the generation of output of a higher volume than a low authorization level.

6. The method of any one of the preceding claims, wherein the hierarchical authorization scheme (40) is enforced login-controlled.

7. The method of anyone of the preceding claims, wherein the selection list (30) is utilized in a cooperative workflow during which the selection list (30) is accessible from a plurality of cooperating components (12) of a computer network (10).

8. The method of claim 7, wherein the workflow allows at least one of modifying and displaying the selection list (30) or parts thereof within the workflow.

9. The method of any one of the preceding claims, further comprising providing one or more sets of output campaign management data, the output campaign management data including at least one of workflow control data, output channel specification data and output content data.

10. The method of claim 9, wherein the workflow control data includes a specification of network components (12) participating in the workflow.

11. The method of claim 9 or 10, wherein the workflow control data includes a specification of a workflow portion performed upon receipt of an output response.

12. The method of one of claims 9 to 11, wherein the output content data includes a link to a data file containing output content.

13. The method of one of claims 9 to 12, further comprising the steps of linking an individual set of campaign management data with one or more selection lists (30) or parts thereof and generating the output as defined by the campaign management data on the basis of the contact information included in the one or more selection lists (30) or parts thereof.

14. The method of any one of the preceding claims, further comprising the step of centrally providing a set of selection lists (30).

15. The method of claim 14, further comprising the step of enabling a selection of an individual selection list (30) from the set of selection lists.

16. The method of claim 14 or 15, further comprising the step of a mechanism for aging-out a selection list (30) from the set of selection lists.

17. The method of any one of the preceding claims, further comprising the step of providing a mechanism (26) for automatically analyzing an output response.

18. The method of any of the preceding claims, further comprising the step of at least one of updating and supplementing the data pool (20) in dependence of an evaluation of an output response.

19. The method of any of the preceding claims, further comprising the steps of
- providing a campaign management authorization scheme;
- defining a set of campaign management functions associated with the campaign management authorization scheme; and
- providing a sub-set of the campaign management functions to a user generating or modifying an output management campaign dependent on his authorization within the campaign management authorization scheme.

20. A computer program product comprising program code portions for performing the steps of any one of the preceding claims when the computer program product is run on one or more components of a computer network.

21. The computer program product of the preceding claim, stored on a computer readable recording medium.

22. A selection system for assisting the output management of content via an output channel to a plurality of recipients, wherein the output volume is dependent on the amount of data records (42) selected from a data pool (20) in response to a selection operation, the system comprising
- a data pool (20) with data records (42) that include at least contact information, the data pool (20) being structured in accordance with a hierarchical authorization scheme (40) having several authorization levels;
- an authorization mechanism (14, 16) adapted to determine the authorization associated with a selection operation;
- a unit (14, 22) adapted to restrict the selection operation to a portion of the data pool (20) that corresponds to the authorization, so that the amount of selected data records (42) correlates with the authorization level of the authorization underlying the selection operation, whereby the selection volume is controlled by an appropriate assignment of authorizations, a higher authorization level allowing the selection of data records of a higher volume than a low authorization level;
- a generator (22) adapted to generate a selection list (30) with contact information included in the data records (42) selected from the data pool portion to which the selection operation has been restricted; and
- an interface adapted to make the selection list (30) available for the automatic generation of output on the basis of the contact information included in the selection list (30).

23. An output management system for managing the output of content via an output channel to a plurality of recipients, wherein the output volume is dependent on the content of a selection list (30) accessible via a computer network, the system comprising
- a selection list (28, 30) that includes at least contact information and hierarchy information relating to a hierarchical authorization scheme (40) having several authorization levels;
- an authorization mechanism (14, 16) adapted to determine the authorization associated with a request to access the selection list (30);
- a unit (14, 12) adapted to restrict access to a portion of the selection list (30) that corresponds to the authorization associated with the access request, so that the amount of accessible list entries correlates with the authorization level of the authorization underlying the access request; and
- means (32, 24) adapted to automatically generate the output on the basis of the contact information included in the selection list (30), whereby the output volume is controlled by an appropriate assignment of authorizations, a higher authorization level allowing the generation of output of a higher volume than a low authorization level.

## Patentansprüche

1. Verfahren zur Verwaltung der Ausgabe von Inhalt über einen Ausgabekanal an eine Vielzahl von Empfängern, wobei das Ausgabevolumen von der Anzahl von Datensätzen (42) abhängt, die als Antwort auf eine Auswahloperation aus einer Datensammlung (20) ausgewählt wurden, wobei das Verfahren folgende Schritte umfasst:
- Bereitstellen einer Datensammlung (20) mit Datensätzen (42), die wenigstens Kontaktinformationen enthalten, wobei die Datensammlung (20) gemäß einem hierarchischen Autorisierungsschema (40), das mehrere Autorisierungsstufen besitzt, strukturiert ist;
- Bestimmen einer der Auswahloperation zugeordneten Autorisierung;
- Beschränken der Auswahloperation auf einen der Autorisierung entsprechenden Teil der Datensammlung (20), so dass die Anzahl der ausgewählten Datensätze (42) mit der Autorisierungsstufe der der Auswahloperation zu Grunde liegenden Autorisierung korreliert, wodurch das Ausgabevolumen durch eine geeignete Zuordnung von Autorisierungen gesteuert wird, wobei eine höhere Autorisierungsstufe die Auswahl eines größeren Volumens von Datensätzen erlaubt als eine niedrige Autorisierungsstufe;
- Erzeugen einer Auswahlliste (30) mit Kontaktinformationen, die in aus der Datensammlung (20) ausgewählten Datensätzen (42) enthalten sind; und
- Zur Verfügung stellen der Auswahlliste (30) zur automatischen Erzeugung einer auf den in der Auswahlliste (30) enthaltenen Kontaktinformationen basierenden Ausgabe.

2. Verfahren gemäß Anspruch 1, welches zusätzlich den Schritt des Erzeugens der Auswahlliste (30) derart, dass ihr Inhalt das hierarchische Autorisierungsschema wiederspiegelt, umfasst.

3. Verfahren gemäß Anspruch 1 oder 2, wobei die Datensätze (42) Hierarchieinformationen enthalten, und den Schritt des Entnehmens der in den ausgewählten Datensätzen (42) enthaltenen Hierarchieinformationen in die Auswahlliste (30) umfassend.

4. Verfahren gemäß Anspruch 2 oder 3, zusätzlich die Schritte des Empfangens einer Anforderung, auf die Auswahlliste (30) zuzugreifen, sowie des Beschränkens des Zugriffs auf die Auswahlliste (30) gemäß der Autorisierung, die der Zugriffsanforderung zugeordnet ist, umfassend.

5. Verfahren zur Verwaltung der Ausgabe von Inhalt über einen Ausgabekanal an eine Vielzahl von Empfängern, wobei das Ausgabevolumen vom Inhalt einer Auswahlliste (30) abhängt, auf die über ein Computernetzwerk zugegriffen werden kann, wobei das Verfahren folgende Schritte umfasst:
- Bereitstellen einer Auswahlliste (30), die wenigstens Kontaktinformationen und sich auf ein hierarchisches Autorisierungsschema (40) mit mehreren Autorisierungsstufen beziehende Hierarchieinformationen enthält;
- Bestimmen der Autorisierung, die einer Anforderung, auf die Auswahlliste (30) zuzugreifen, zugeordnet ist;
- Beschränken des Zugriffs auf einen der Autorisierung entsprechenden Teil der Auswahlliste (30), so dass der Umfang der Listeneinträge, auf die zugegriffen werden kann, mit der Autorisierungsstufe der Autorisierung, die der Zugriffsanforderung zu Grunde liegt, korreliert; und
- automatisches Erzeugen der Ausgabe auf der Grundlage der in der Auswahlliste (30) enthaltenen Kontaktinformation, wodurch das Ausgabevolumen durch eine geeignete Zuordnung von Autorisierungen gesteuert wird, wobei eine höhere Autorisierungsstufe die Erzeugung einer Ausgabe eines größeren Volumens erlaubt als eine niedrige Autorisierungsstufe.

6. Verfahren gemäß einem der vorangegangenen Ansprüche, wobei das hierarchische Autorisierungsverfahren (40) Login-gesteuert durchgesetzt wird.

7. Verfahren gemäß einem der vorangegangenen Ansprüche, wobei die Auswahlliste (30) in einem kooperativen Arbeitsablauf verwendet wird, im Zuge dessen auf die Auswahlliste (30) von einer Vielzahl kooperierender Komponenten (12) eines Computernetzwerks (10) zugegriffen werden kann.

8. Verfahren gemäß Anspruch 7, wobei der Arbeitsablauf das Abändern und/oder das Anzeigen der Auswahlliste (30) oder von Teilen davon innerhalb des Arbeitsablaufes erlaubt.

9. Verfahren gemäß einem der vorangegangenen Ansprüche, ferner das Bereitstellen eines oder mehrerer Sätze von Verwaltungsdaten für Ausgabekampagnen umfassend, wobei die Verwaltungsdaten für Ausgabekampagnen Arbeitsablauf-Steuerdaten und/oder Ausgabekanal-Spezifikationsdaten und/oder Ausgabe-Inhaltsdaten beinhalten.

10. Verfahren gemäß Anspruch 9, wobei die Arbeitsablauf-Steuerdaten eine Beschreibung der Netzwerkkomponenten (12) beinhalten, die am Arbeitsablauf teilnehmen.

11. Verfahren gemäß Anspruch 9 oder 10, wobei die Arbeitsablauf-Steuerdaten die Beschreibung eines Teils des Arbeitsablaufs enthalten, der nach Empfang einer Ausgabeantwort ausgeführt wird.

12. Verfahren gemäß einem der Ansprüche 9 bis 11, wobei die Ausgabe-Inhaltsdaten einen Link zu einer Datei beinhalten, die Ausgabeinhalte enthält.

13. Verfahren gemäß einem der Ansprüche 9 bis 12, ferner die Schritte des Verlinkens eines einzelnen Satzes von Kampagnen-Verwaltungsdaten mit einer oder mehreren Auswahllisten (30) oder von Teilen davon sowie des Erzeugens der Ausgabe wie durch die Kampagnen-Verwaltungsdaten definiert auf der Grundlage der in einer oder mehreren Auswahllisten (30) oder von Teilen davon enthaltenen Kontaktinformationen umfassend.

14. Verfahren gemäß einem der vorangegangenen Ansprüche, ferner den Schritt des zentralen Bereitstellens eines Satzes von Auswahllisten (30) umfassend.

15. Verfahren gemäß Anspruch 14, ferner den Schritt des Ermöglichens einer Auswahl einer einzelnen Auswahlliste (30) aus dem Satz von Auswahllisten (30) umfassend.

16. Verfahren gemäß Anspruch 14 oder 15, ferner den Schritt eines Mechanismus für das altersbedingte Aussondern einer Auswahlliste (30) aus dem Satz von Auswahllisten (30) umfassend.

17. Verfahren nach einem der vorangegangenen Ansprüche, ferner den Schritt des Bereitstellens eines Mechanismus (26) zur automatischen Analyse einer Ausgabeantwort umfassend.

18. Verfahren nach einem der vorangegangenen Ansprüche, ferner den Schritt des Aktualisierens und/oder Ergänzens der Datensammlung (20) in Anhängigkeit einer Auswertung einer Ausgabeantwort umfassend.

19. Verfahren nach einem der vorangegangenen Ansprüchen, ferner folgende Schritte umfassend:
- Bereitstellen eines Kampagnenverwaltungs-Autorisierungsschemas;
- Definieren eines Satzes von Kampagnen-Verwaltungsfunktionen, die dem Kampagnenverwaltungs-Autorisierungsverfahren zugeordnet sind; und
- Bereitstellen einer Teilmenge der Kampagnen Verwaltungsfunktionen für einen eine Ausgabe-Verwaltungskampagne erstellenden oder abändernden Benutzer in Anhängigkeit seiner Autorisierung innerhalb des Kampagnenverwaltungs-Autorisierungsschemas.

20. Computerprogrammprodukt, welches Programmcode-Abschnitte zur Durchführung der Schritte eines der vorangegangenen Ansprüche umfasst, wenn das Computerprogrammprodukt auf einer oder mehreren Komponenten eines Computernetzwerks abläuft.

21. Auf einem computerlesbaren Aufzeichnungsmedium gespeichertes Computerprogrammprodukt gemäß dem vorangegangenen Anspruch.

22. Auswahlsystem zur Unterstützung der Ausgabeverwaltung von Inhalt über einen Ausgabekanal an eine Vielzahl von Empfängern, wobei das Ausgabevolumen von der Anzahl von Datensätzen (42) abhängt, die als Antwort auf eine Auswahloperation aus einer Datensammlung (20) ausgewählt wurden, wobei das System Folgendes umfasst:
- eine Datensammlung (20) mit Datensätzen (42), die wenigstens Kontaktinformationen enthalten, wobei die Datensammlung gemäß einem hierarchischen Autorisierungsschema (40), das mehrere Autorisierungsstufen besitzt, strukturiert ist;
- einen Autorisierungsmechanismus (14, 16), der dazu ausgeführt ist, die einer Auswahloperation zugeordnete Autorisierung zu bestimmen;
- eine Einheit (14, 22), die dazu ausgeführt ist, die Auswahloperation auf einen der Autorisierung entsprechenden Teil der Datensammlung (20) zu beschränken, so dass die Anzahl der ausgewählten Datensätze (42) mit der Autorisierungsstufe der der Auswahloperation zu Grunde liegenden Autorisierung korreliert, wodurch das Ausgabevolumen durch eine geeignete Zuordnung von Autorisierungen gesteuert wird, wobei eine höhere Autorisierungsstufe die Auswahl eines größeren Volumens von Datensätzen (42) erlaubt als eine niedrige Autorisierungsstufe;
- einen Generator (22), der dazu ausgeführt ist, eine Auswahlliste (30) mit Kontaktinformationen zu erzeugen, die in den Datensätzen enthalten sind, die aus dem Teil der Datenbank ausgewählt wurden, auf den die Auswahloperation beschränkt war; und
- eine Schnittstelle, die dazu ausgeführt ist, die Auswahlliste (30) für die automatische Erzeugung einer Ausgabe auf der Grundlage der in der Auswahlliste enthaltenen Kontaktinformationen zur Verfügung zu stellen.

23. Ausgabeverwaltungssystem zur Verwaltung der Ausgabe von Inhalt über einen Ausgabekanal an eine Vielzahl von Empfängern, wobei das Ausgabevolumen vom Inhalt einer Auswahlliste (30) abhängt, auf die über ein Computernetzwerk zugegriffen werden kann, wobei das System Folgendes umfasst:
- eine Auswahlliste (28, 30), die wenigstens Kontaktinformationen und sich auf ein hierarchisches Autorisierungsverfahren (40) mit mehreren Autorisierungsstufen beziehende Hierarchieinformationen enthält;
- einen Autorisierungsmechanismus (14, 16), der dazu ausgeführt ist, die Autorisierung, die einer Anforderung, auf die Auswahlliste (30) zuzugreifen, zugeordnet ist, zu bestimmen;
- eine Einheit (14, 12), die dazu ausgeführt ist, den Zugriff auf einen Teil der Auswahlliste (30) zu beschränken, welcher der der Zugriffsanforderung zugeordneten Autorisierung entspricht, so dass die Anzahl der Listeneinträge, auf die zugegriffen werden kann, mit der Autorisierungsstufe der der Zugriffsanforderung zu Grunde liegenden Autorisierung korreliert; und
- Mittel (32, 34), die dazu ausgeführt sind, auf der Grundlage der in der Auswahlliste (30) enthaltenen Kontaktinformationen automatisch die Ausgabe zu erzeugen, wodurch das Ausgabevolumen durch eine geeignete Zuordnung von Autorisierungen gesteuert wird, wobei eine höhere Autorisierungsstufe die Erzeugung einer Ausgabe eines größeren Volumens erlaubt als eine niedrige Autorisierungsstufe.

## Revendications

1. Procédé de gestion de la sortie d'un contenu via un canal de sortie vers une pluralité de destinataires, dans lequel le volume de sortie dépend de la quantité d'enregistrements de données (42) sélectionnés à partir d'un ensemble de données (20) en réponse à une opération de sélection, le procédé comprenant les étapes consistant à
- prévoir un ensemble de données (20) ayant des enregistrements de données (42) qui comprennent au moins des informations de contact, l'ensemble de données (20) étant structuré selon un schéma d'autorisation hiérarchique (40) possédant plusieurs nivaux d'autorisation ;
- déterminer une autorisation associée à l'opération de sélection ;
- restreindre l'opération de sélection à une partie de l'ensemble de données (20) qui correspond à l'autorisation, de telle sorte que la quantité d'enregistrements de données sélectionnés (42) soit corrélée avec le niveau d'autorisation de l'autorisation sous-jacente à l'opération de sélection, moyennant quoi le volume de sélection est contrôlé par une attribution appropriée d'autorisations, un niveau d'autorisation plus élevé permettant la sélection d'enregistrements de données ayant un volume supérieur à un niveau d'autorisation faible ;
- générer une liste de sélection (30) avec des informations de contact incluses dans les enregistrements de donnés (42) sélectionnés à partir de l'ensemble de données (20) ; et
- rendre la liste de sélection (30) disponible pour la génération automatique d'une sortie sur la base des informations de contact incluses dans la liste de sélection (30).

2. Procédé selon la revendication 1, comprenant en outre l'étape de génération de la liste de sélection (30) de telle sorte que son contenu reflète le schéma d'autorisation hiérarchique (40).

3. Procédé selon la revendication 1 ou 2, dans lequel les enregistrements de données (42) comprennent des informations de hiérarchie, et comprenant l'étape d'extraction des informations de hiérarchie incluses dans les enregistrements de données sélectionnés (42) dans la liste de sélection (30).

4. Procédé selon la revendication 2 ou 3, comprenant en outre les étapes de réception d'une demande d'accès à la liste de sélection (30) et de restriction de l'accès à la liste de sélection (30) selon l'autorisation associée à la demande d'accès.

5. Procédé de gestion de la sortie d'un contenu via un canal de sortie vers une pluralité de destinataires, dans lequel le volume de sortie dépend du contenu d'une liste de sélection (30) accessible via un réseau informatique, le procédé comprenant les étapes consistant à
- prévoir une liste de sélection (30) qui comprend au moins des informations de contact et des informations de hiérarchie relatives à un schéma d'autorisation hiérarchique (40) possédant plusieurs niveaux d'autorisation ;
- déterminer l'autorisation associée à une demande d'accès à la liste de sélection (30) ;
- restreindre l'accès à une partie de la liste de sélection (30) qui correspond à l'autorisation, de telle sorte que la quantité d'entrées de liste accessibles soit corrélée avec le niveau d'autorisation de l'autorisation sous-jacente à la demande d'accès ; et
- générer automatiquement la sortie sur la base des informations de contact incluses dans la liste de sélection (30), moyennant quoi le volume de sortie est contrôlé par une attribution appropriée d'autorisations, un niveau d'autorisation plus élevé permettant la génération d'une sortie ayant un volume plus élevé qu'un niveau d'autorisation faible.

6. Procédé selon l'une quelconque des revendications précédentes, dans lequel le schéma d'autorisation hiérarchique (40) est contrôlé par une ouverture de session.

7. Procédé selon l'une quelconque des revendications précédentes, dans lequel la liste de sélection (30) est utilisée dans un circuit de production coopératif pendant lequel la liste de sélection (30) est accessible depuis une pluralité de composants coopératifs (12) d'un réseau informatique (10) .

8. Procédé selon la revendication 7, dans lequel le circuit de production permet au moins l'un de la modification et de l'affichage de la liste de sélection (30) ou de parties de celle-ci au sein du circuit de production.

9. Procédé selon l'une quelconque des revendications précédentes, comprenant en outre le fait de prévoir un ou plusieurs ensembles de données de gestion de campagne de sortie, les données de gestion de campagne de sortie comprenant au moins l'un de données de contrôle de circuit de production, de données de spécification de canal de sortie et de données de contenu de sortie.

10. Procédé selon la revendication 9, dans lequel les données de contrôle de circuit de production comprennent une spécification des composants réseau (12) participant au circuit de production.

11. Procédé selon la revendication 9 ou 10, dans lequel les données de contrôle de circuit de production comprennent une spécification d'une partie du circuit de production effectuée lors de la réception d'une réponse de sortie.

12. Procédé selon l'une des revendications 9 à 11, dans lequel les données de contenu de sortie comprennent une liaison vers un fichier de données contenant un contenu de sortie.

13. Procédé selon l'une des revendications 9 à 12, comprenant en outre les étapes de liaison d'un ensemble individuel de données de gestion de campagne avec une ou plusieurs liste(s) de sélection (30) ou parties de celle(s)-ci, et de génération de la sortie définie par les données de gestion de campagne sur la base des informations de contact incluses dans la ou les liste(s) de sélection (30) ou parties de celle(s)-ci.

14. Procédé selon l'une quelconque des revendications précédentes, comprenant en outre l'étape consistant à prévoir de manière centrale un ensemble de listes de sélection (30).

15. Procédé selon la revendication 14, comprenant en outre l'étape consistant à permettre une sélection d'une liste de sélection individuelle (30) parmi l'ensemble des listes de sélection.

16. Procédé selon la revendication 14 ou 15, comprenant en outre l'étape d'un mécanisme destiné à affiner une liste de sélection (30) parmi l'ensemble de listes de sélection.

17. Procédé selon l'une quelconque des revendications précédentes, comprenant en outre l'étape consistant à prévoir un mécanisme (26) destiné à analyser automatiquement une réponse de sortie.

18. Procédé selon l'une quelconque des revendications précédentes, comprenant en outre l'étape consistant en au moins l'une de la mise à jour et de la supplémentation de l'ensemble de données (20) en fonction d'une évaluation d'une réponse de sortie.

19. Procédé selon l'une quelconque des revendications précédentes, comprenant en outre les étapes consistant à
- prévoir un schéma d'autorisation de gestion de campagne ;
- définir un ensemble de fonctions de gestion de campagne associées au schéma d'autorisation de gestion de campagne ; et
- fournir un sous-ensemble de fonctions de gestion de campagne à un utilisateur générant ou modifiant une campagne de gestion de sortie selon son autorisation au sein du schéma d'autorisation de gestion de campagne.

20. Produit de programme informatique comprenant des parties de codes de programmes afin d'effectuer les étapes selon l'une quelconque des revendications précédentes lorsque le produit de programme informatique est exécuté sur un ou plusieurs composant(s) d'un réseau informatique.

21. Produit de programme informatique selon la revendication précédente, stocké sur un support d'enregistrement lisible par ordinateur.

22. Système de sélection destiné à faciliter la gestion de sortie d'un contenu via un canal de sortie vers une pluralité de destinataires, dans lequel le volume de sortie dépend de la quantité d'enregistrements de données (42) sélectionnés parmi un ensemble de données (20) en réponse à une opération de sélection, le système comprenant
- un ensemble de données (20) ayant des enregistrements de données (42) qui comprennent au moins des informations de contact, l'ensemble de données (20) étant structuré selon un schéma d'autorisation hiérarchique (40) possédant plusieurs niveaux d'autorisation ;
- un mécanisme d'autorisation (14, 16) adapté afin de déterminer l'autorisation associée à une opération de sélection ;
- une unité (14, 22) adaptée afin de restreindre l'opération de sélection à une partie de l'ensemble de données (20) qui correspond à l'autorisation, de telle sorte que la quantité d'enregistrements de données sélectionnés (42) soit corrélée avec le niveau d'autorisation de l'autorisation sous-jacente à l'opération de sélection, moyennant quoi le volume de sélection est contrôlé par une attribution appropriée d'autorisations, un niveau d'autorisation plus élevé permettant la sélection d'enregistrements de données ayant un volume supérieur à un niveau d'autorisation faible ;
- un générateur (22) adapté afin de générer une liste de sélection (30) avec des informations de contact incluses dans les enregistrements de données (42) sélectionnés parmi la partie de l'ensemble de données à laquelle l'opération de sélection a été restreinte ; et
- une interface adaptée afin de rendre la liste de sélection (30) disponible pour la génération automatique d'une sortie sur la base des informations de contact incluses dans la liste de sélection (30).

23. Système de gestion de sortie destiné à gérer la sortie d'un contenu via un canal de sortie vers une pluralité de destinataires, dans lequel le volume de sortie dépend du contenu d'une liste de sélection (30) accessible via un réseau informatique, le système comprenant
- une liste de sélection (28, 30) qui comprend au moins des informations de contact et des informations de hiérarchie relatives à un schéma d'autorisation hiérarchique (40) possédant plusieurs niveaux d'autorisation ;
- un mécanisme d'autorisation (14, 16) adapté afin de déterminer l'autorisation associée à une demande d'accès à la liste de sélection (30) ;
- une unité (14, 12) adaptée afin de restreindre l'accès à une partie de la liste de sélection (30) qui correspond à l'autorisation associée à la demande d'accès, de telle sorte que la quantité d'entrées de liste accessibles soit corrélée avec le niveau d'autorisation de l'autorisation sous-jacente à la demande d'accès ; et
- un moyen (32, 24) adapté afin de générer automatiquement la sortie sur la base des informations de contact incluses dans la liste de sélection (30), moyennant quoi le volume de sortie est contrôlé par une attribution appropriée d'autorisations, un niveau d'autorisation plus élevé permettant la génération d'une sortie ayant un volume supérieur à un niveau d'autorisation faible.
